(19) Europäisches Patentamt
European Patent Office
Office européen des brevets

(11) Veröffentlichungsnummer: **0 389 903 A1**

(12) # EUROPÄISCHE PATENTANMELDUNG

(21) Anmeldenummer: **90105077.3**

(22) Anmeldetag: **17.03.90**

(51) Int. Cl.⁵: **C08K 5/353, C08L 81/02**

(30) Priorität: **30.03.89 DE 3910278**

(43) Veröffentlichungstag der Anmeldung:
**03.10.90 Patentblatt 90/40**

(84) Benannte Vertragsstaaten:
**BE DE ES FR GB IT**

(71) Anmelder: **BAYER AG**
**D-5090 Leverkusen 1 Bayerwerk(DE)**

(72) Erfinder: **Köhler, Burkhard, Dr.**
**Mündelheimer Strasse 94**
**D-4150 Krefeld 11(DE)**
Erfinder: **Traenckner, Hans Joachim, Dr.**
**Leiebos 31, Bus 00111**
**B-2060 Merksem(BE)**
Erfinder: **Wehnert, Wolfgang, Dr.**
**Bodelschwinghstrasse 14**
**D-4150 Krefeld(DE)**
Erfinder: **Heinz, Hans-Detlef, Dr.**
**Breslauer Strasse 31**
**D-4150 Krefeld 11(DE)**

(54) **Mischungen aus Polyarylensulfiden und Oxazolinen.**

(57) Die Erfindung betrifft Mischungen aus Oxazolinen und Polyarylensulfiden (PAS), vorzugsweise Polyphenylensulfide (PPS) mit verminderter Kristallisationsgeschwindigkeit und/oder erhöhter Schmelzviskosität.

EP 0 389 903 A1

Xerox Copy Centre

## Mischungen aus Polyarylensulfiden und Oxazolinen

Die Erfindung betrifft Mischungen aus Oxazolinen und Polyarylensulfiden (PAS), vorzugsweise Polyphenylensulfide (PPS) mit verminderter Kristallisationsgeschwindigkeit und/oder erhöhter Schmelzviskosität.

Polyarylensulfide sind bekannt (z.B. US-A 3 354 129, EP-A 171 021). Sie sind inerte hochtemperaturbeständige Thermoplaste, die einen hohen Füllgrad, z.B. mit Glasfasern und/oder anderen anorganischen Füllstoffen erlauben. Der Einsatz dieser Polymeren, insbesondere des Polyarylensulfids (PPS), nimmt vor allem in Bereichen zu, die bislang Duroplasten vorbehalten waren.

Für manche Anwendungen sind Polyarylensulfide mit einer verringerten Kristallisationsgeschwindigkeit von Vorteil, z.B. bei der Umhüllung von elektronischen Bauteilen wie Microchips. Bei der Umhüllung dieser Chips können schnell kristallisierende Materialien die vorhandenen Banddrähtchen verwehen.

Für andere Anwendungen sind Polyarylensulfide mit erhöhter Schmelzviskosität von Vorteil, da solche Materialien verbesserte mechanische Werte aufweisen.

Die Schmelzviskosität von Polyarylensulfiden läßt sich nachträglich z.B. durch Luft (z.B. US-A 3 524 835), Schwefel (z.B. Polym. Degradation and Stability 11, 55 (19085), Disulfonsäuren (z.B. US-PS 3 839 301) erhöhen. Die Eigenfarbe dieser PPS-Typen ist jedoch dunkelbraun bis schwarz.

Es wurde nun gefunden, daß Polyarylensulfide, vorzugsweise PPS, in Abmischung mit ausgewählten Oxazolinen erhöhte Schmelzviskositäten und/oder verminderte Kristallisationsgeschwindigkeiten und/oder verbesserte mechanische Eigenschaften aufweisen, bei gleichzeitiger heller Eigenfarbe der Mischungen.

Gegenstand der Erfindung sind Mischungen aus

A) 70 bis 99,9 Gew.-%, bevorzugt 90 bis 99 Gew.-% Polyarylensulfid, vorzugsweise Polyphenylensulfid,

und

B) 0,01 bis 30 Gew.-%., bevorzugt 1 bis 10 Gew.-% Oxazolinen der Formeln (I) und (II)

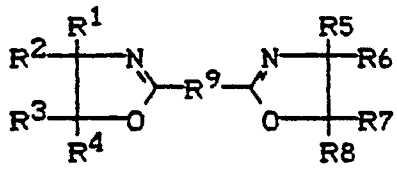

(I) ,

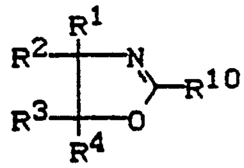

(II),

in welchen

$R^1$ bis $R^8$ unabhängig voneinander Wasserstoff, $C_1$-$C_{22}$-Alkyl-, bevorzugt Methyl oder einen $C_6$-$C_{14}$-Aryl-, bevorzugt einen Phenylrest, besonders bevorzugt Wasserstoff bedeuten, wobei zwei an einen Oxazolinring gebundene Reste Glieder eines 5 bis 12 Atome zählenden Ringes sein können,

$R^9$ eine chemische Bindung, einen $C_1$-$C_{36}$-Alkylen-oder einen $C_6$-$C_{14}$-Arylen-, bevorzugt einen Phenylenrest bedeutet und

$R^{10}$ Wasserstoff, $C_1$-$C_{22}$-Alkyl-, einen $C_7$-$C_{24}$-Aralkyl- oder -Alkylaryl, einen $C_5$-$C_{12}$-Cycloalkyl oder einen $C_6$-$C_{14}$-Aryl-, bevorzugt einen Rest mit einem Molgewicht über 100 bedeutet.

Die Herstellung der erfindungsgemäßen Mischungen erfolgt in der Schmelze. Polyphenylensulfid und Oxazolidin werden in der Schmelze homogenisiert.

Erfindungsgemäß einsetzbare Polyarylensulfide, vorzugsweise PPS haben Schmelzviskositäten von 5 bis 500 Pas (gemessen bei 306° C und einer Schubspannung von 1.000 Pa).

Beispiele für erfindungsgemäß einsetzbare Oxazoline der Formel (I) sind 1,4-Bis(oxazolinyl-2')-benzol, 1,3-Bis(oxazolinyl-2')-benzol, 1,2-Bis(oxazolinyl)-benzol, 1,4-Bis(oxazolinyl-2')-butan, 1,6-Bis(oxazalinyl-2')-hexan usw.

Beispiele für erfindungsgemäß einsetzbare Oxazoline der Formel (II) sind 2-(1'-Naphthyl)-oxazalin, 2-(2'-Naphthyl)-oxazolin, 2-Dodekacyl-oxazolin, 2-Octadecyl-oxazolin usw.

Erfindungsgemäß einsetzbare Oxazoline sind bekannt, z.B. D.B.P. 955 951. Sie können nach bekannten Methoden z.B. aus Säuren oder deren Derivaten und Aminoalkoholen hergestellt werden.

Für die Herstellung der erfindungsgemäßen Mischungen eignen sich bekannte Schmelzmischaggregate, z.B. Kneter, Schneckenwellenextruder usw.

Oxazoline sind durch Umsetzung der entsprechenden Säure oder deren aktivierten Derivaten, wie z.B.

Nitrilen oder Säurechloriden, mit einem 2-Aminoalkohol nach bekannten Verfahren zugänglich.

Der Zusatz der Oxazoline der Formeln (I) und/oder (II) kann auch während der Herstellung der Polyarylensulfide, insbesondere in der Endphase der Polymerisationsreaktion erfolgen.

Die erfindungsgemäßen Mischungen können mit üblichen Füllstoffen, z.B. Glasfasern und/oder anderen anorganischen Verstärkungs- und/oder Füllstoffen, z.B. Talk, Gips, Calciumcarbonat, Magnesiumcarbonat, Dolomit, Glimmer usw., abgemischt werden.

Die erfindungsgemäßen Mischungen eignen sich zur Herstellung von Formkörpern (z.B. durch Spritzgießen, Extrusion), Fasern, Folien und Halbzeug. Sie zeichnen sich durch eine geringere Kristallisationsgeschwindigkeit und gute mechanische Eigenschaften aus.

Beispiel 1

Man versetzt 10 g PPS der Schmelzviskosität 40 Pas mit 1 g 1,4-Bis(oxazolinyl-2′)-benzol und erhitzt 1 Stunde unter Stickstoff auf 310 °C.

| Beispiel | Schmelzviskosität | Kristallisationstemperatur*) |
|---|---|---|
| 1 | 200 Pas | 202 °C |
| Vergleichsbeispiel**) | 40 Pas | 235 °C |

*) Die Kristallisationstemperatur, ein Maß für die Kristallisationsgeschwindigkeit, wurde aus der Abkühlkurve des DSC bestimmt.
**) unbehandeltes PPS.

Beispiel 2

Man stellt durch Extrusion in einem ZSK 30-Extruder der Firma Werner & Pfleiderer bei 320 °C eine Mischung aus 59 Gew.-%. PPS (40 Pas), 1 Gew.-% 1,4-Bis(oxazolinyl-2′)-Benzol und 40 Gew.-%. Glasfaser (CS 7916®) her. Die Schlagzähigkeit (bestimmt nach ISO 180) eines Stabes der Abmessungen 80x10x4 mm beträgt 36 kJ/$m^2$, die eines Stabes ohne das erfindungsgemäße Additiv 30 kJ/$m^2$.

**Ansprüche**

1. Mischungen aus

A) 70 bis 99,9 Gew.-%., bevorzugt 90 bis 99 Gew.-% Polyarylensulfids, vorzugsweise Polyphenylensulfid,

und

B) 0,01 bis 30 Gew.-%, bevorzugt 1 bis 10 Gew.-% von Oxazolinen der Formeln (I) und (II)

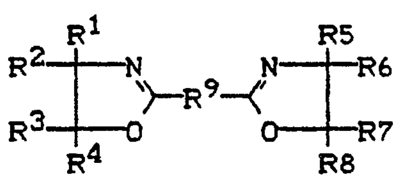

(I) ,

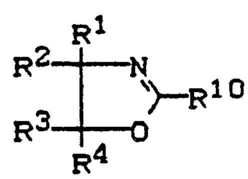

(II),

in welchen

$R^1$ bis $R^8$ unabhängig voneinander Wasserstoff, $C_1$-$C_{22}$-Alkyl-, bevorzugt Methyl oder einen $C_6$-$C_{14}$-Aryl-, bevorzugt einen Phenylrest, besonders bevorzugt Wasserstoff bedeuten, wobei zwei an einen Oxazolinring gebundene Reste Glieder eines 5 -12 Atome zählenden Ringes sein können,

$R^9$ eine chemische Bindung, einen $C_1$-$C_{36}$-Alkylen-oder einen $C_6$-$C_{14}$-Arylen-, bevorzugt einen Phenylenrest bedeutet und

$R^{10}$ Wasserstoff, $C_1$-$C_{22}$-Alkyl-, einen $C_7$-$C_{24}$-Aralkyl- oder -Alkylaryl, einen $C_5$-$C_{12}$-Cycloalkyl oder einen $C_6$-$C_{14}$-Aryl-, bevorzugt einen Rest mit einem Molgewicht über 100 bedeutet.

2. Verwendung von Mischungen nach Anspruch 1 zur Herstellung geformter Körper.

Europäisches Patentamt

# EUROPÄISCHER RECHERCHENBERICHT

Nummer der Anmeldung

EP 90 10 5077

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,A | EP-A-0 332 997 (BAYER)<br>* Seite 2, Zeilen 6-17; Ansprueche * | 1,2 | C 08 K 5/353<br>C 08 L 81/02 |
| A | EP-A-0 275 991 (DAINIPPON INK AND CHEMICAL INC.)<br>* Ansprueche * | 1,2 | |
| P,A | DATABASE WPIL<br>Nr. 89353812, Derwent Publications, London, GB; & JP-A-1266160 (MITSUBISHI GAS CHEM) 24.10.1989 | 1,2 | |

RECHERCHIERTE SACHGEBIETE (Int. Cl.5)

C 08 K
C 08 L
C 08 G

Der vorliegende Recherchenbericht wurde für alle Patentansprüche erstellt

| Recherchenort | Abschlußdatum der Recherche | Prüfer |
|---|---|---|
| BERLIN | 04-07-1990 | BOEKER R.B. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)